(19) **Europäisches Patentamt European Patent Office Office européen des brevets**

(11) **EP 1 299 254 B1**

(12) **FASCICULE DE BREVET EUROPEEN**

(45) Date de publication et mention
de la délivrance du brevet:
**03.01.2007 Bulletin 2007/01**

(51) Int Cl.:
**B60C 15/05** (2006.01) **B60C 9/02** (2006.01)
**B60C 15/06** (2006.01)

(21) Numéro de dépôt: **01945313.3**

(22) Date de dépôt: **25.06.2001**

(86) Numéro de dépôt international:
**PCT/EP2001/007231**

(87) Numéro de publication internationale:
**WO 2002/000454 (03.01.2002 Gazette 2002/01)**

(54) **PNEUMATIQUE A STRUCTURE D'ANCRAGE D'ARMATURE DE CARCASSE PERFECTIONNEE**

REIFEN MIT VERBESSERTEM KARKASSENVERANKERN

TYRE WITH IMPROVED CARCASS REINFORCEMENT ANCHORING STRUCTURE

(84) Etats contractants désignés:
**AT BE CH CY DE DK ES FI FR GB GR IE IT LI LU MC NL PT SE TR**

(30) Priorité: **29.06.2000 FR 0008452**

(43) Date de publication de la demande:
**09.04.2003 Bulletin 2003/15**

(73) Titulaires:
• **Société de Technologie Michelin**
  **63000 Clermont-Ferrand (FR)**
• **MICHELIN Recherche et Technique S.A.**
  **1763 Granges-Paccot (CH)**

(72) Inventeurs:
• **HERBELLEAU, Yves**
  **F-63200 Riom (FR)**
• **GUERINON, Bernard**
  **F-63100 Clermont-Ferrand (FR)**
• **ROUX, Pierre**
  **F-63000 Clermont-Ferrand (FR)**

(74) Mandataire: **Le Cam, Stéphane Georges Elie**
  **M.F.P. Michelin,**
  **SGD/LG/PI - F 35 - Ladoux**
  **63040 Clermont-Ferrand Cedex 09 (FR)**

(56) Documents cités:
| | |
|---|---|
| WO-A-00/34059 | WO-A-01/36219 |
| WO-A-98/54006 | US-A- 5 253 690 |
| US-A- 5 660 656 | US-A- 5 702 548 |

**Description**

L'invention concerne les pneumatiques destinés à porter de lourdes charges tels que par exemple les pneumatiques d'avion.

Les pneumatiques pour avion doivent résister à des conditions en service extrêmes, notamment en termes de charge appliquée et de vitesse compte tenu de leur poids et de leur taille faibles. Il en résulte, en dépit de leurs pressions de gonflage très élevées, supérieures à 12 bars, que leur écrasement ou flèche en service peut atteindre couramment des valeurs doubles de celles observées pour des pneumatiques poids lourds ou de tourisme.

Lors des décollages, des vitesses très élevées, de l'ordre de 350 km/heure, sont atteintes d'où des conditions d'échauffement aussi très sévères.

Toutes ces conditions sont particulièrement pénalisantes pour l'endurance des bourrelets de ces pneumatiques.

Le brevet US 4,832102 décrit un pneumatique d'avion comprenant un sommet, deux flancs et deux bourrelets, une armature de carcasse et une armature de sommet dans lequel l'armature de carcasse comprend deux alignements circonférentiels de renforts de haut module d'élasticité, ancrés dans les deux bourrelets, et l'armature de sommet comprend au moins un bloc de travail avec au moins une nappe de renforts de haut module d'élasticité. L'armature de carcasse est ancrée dans les bourrelets par le retournement, autour d'une tringle, des deux alignements circonférentiels de premiers renforts de haut module d'élasticité.

Les demandes de brevet EP 0 582 196 et EP 0 664 232 ont récemment proposé, dans le cas de pneumatiques pour véhicules de tourisme, un nouveau type d'armature de carcasse d'un pneumatique et de son ancrage dans ses deux bourrelets. Un pneumatique, selon ces demandes, comporte un bourrelet avec des moyens d'ancrage de l'armature de carcasse comprenant des renforts orientés circonférentiellement bordant axialement les alignements circonférentiels des renforts de l'armature de carcasse.

La demande WO 98/54006 propose un pneumatique dont l'armature de carcasse comprend deux ou trois alignements circonférentiels de renforts dans lequel chaque alignement circonférentiel est bordé axialement intérieurement et extérieurement par des renforts orientés circonférentiellement. Cette demande indique pour constituer les renforts circonférentiels de nombreux types de renforts.

Le brevet US-A-5,660,656 décrit un pneumatique correspondant au préambule de la revendication 1.

L'invention a pour objet un pneumatique dont l'ancrage de l'armature de carcasse est perfectionnée.

Dans ce qui suit, on entend par titre, la masse en grammes de mille mètres d'un renfort. Le titre est exprimé en tex. La contrainte subie par un renfort ou le module de ce renfort sont exprimés en "cN/tex ", cN voulant dire centi-newton.

On entend par " renfort " (" reinforcing thread ") tout élément de renforcement sous forme d'un fil, susceptible de renforcer une matrice déterminée, par exemple une matrice de caoutchouc. A titre de renforts, on citera par exemple des fibres multifilamentaires (" multifilament yarns "), ces fibres pouvant être tordues ou non sur elles-mêmes, des fils unitaires tels que des monofils de diamètre élémentaire élevé, avec ou sans torsion sur eux-mêmes, des câblés ou des retors (" cords ") obtenus par des opérations de câblage ou retordage de ces fils unitaires ou de ces fibres, de tels renforts pouvant être hybrides, c'est-à-dire composites, comportant des éléments de natures différentes.

On entend par " retors " (" plied yarn " ou " folded yarn ") un renfort constitué par deux brins (" single yarns ") ou plus assemblés ensemble par des opérations de retordage ; ces brins, généralement formés de fibres multifilamentaires, sont d'abord retordus individuellement dans un sens (direction de torsion S ou Z) au cours d'une première étape de retordage, puis tordus ensemble en sens inverse (direction de torsion Z ou S, respectivement) au cours d'une seconde étape de retordage.

On entend par " renfort adhérisé " un renfort ayant subi un traitement d'enduction approprié, dit d'encollage ou d'adhérisation, susceptible de faire adhérer ce renfort, après un traitement thermique approprié, à la matrice à laquelle il est destiné.

On entend par " axiale " une direction parallèle à l'axe A du pneumatique ; cette direction peut être " axialement intérieure " lorsqu'elle est dirigée vers l'intérieur du pneumatique et " axialement extérieure " lorsqu'elle est dirigée vers l'extérieur du pneumatique.

On entend par "radiale" une direction perpendiculaire à l'axe A du pneumatique et passant par cet axe A. Cette direction peut être " radialement intérieure " ou " radialement extérieure " selon qu'elle se dirige vers l'axe A ou vers l'extérieur du pneumatique.

On entend par " orientation sensiblement circonférentielle " une orientation ne s'écartant pas de plus de cinq degrés de la direction circonférentielle.

On entend par " module d'élasticité " d'un mélange caoutchoutique un module sécant d'extension à 10 % de déformation et à température ambiante.

Le pneumatique selon l'invention comprend un sommet, deux flancs et deux bourrelets, une armature de carcasse ancrée dans chacun des bourrelets et une armature de sommet. Ce pneumatique est tel que l'armature de carcasse comprend au moins deux alignements circonférentiels de premiers renforts de haut module d'élasticité, chaque alignement circonférentiel des premiers renforts étant, dans chaque bourrelet, bordé axialement intérieurement et axialement extérieurement par des seconds renforts orientés sensiblement circonférentiellement de module supérieur ou égal à celui des premiers renforts, les premiers renforts et seconds renforts étant séparés par une couche de mélange de très haut module d'élasticité et tel que, en considérant $\Sigma R_I$ somme des rigidités d'extension des seconds renforts disposés axialement intérieurement relativement à l'armature de carcasse et en considérant $\Sigma R_E$ somme des rigidités d'extension des seconds renforts disposés axialement de part et d'autre de l'armature de carcasse, on a :

$$0,6 \le \frac{\sum R_I}{\sum R_E} \le 1,5$$

et de préférence :

$$0,7 \le \frac{\sum R_I}{\sum R_E} \le 1,3$$

Le respect de ces limites pour le rapport entre la rigidité totale d'extension des seconds renforts disposés à l'intérieur de l'armature de carcasse dans chaque bourrelet et la rigidité totale d'extension des seconds renforts disposés à l'extérieur de l'armature de carcasse est importante pour obtenir une sollicitation homogène de ces seconds renforts quelle que soit leur position dans le bourrelet.

Ce mode de réalisation d'un bourrelet est particulièrement adapté dans le cas où le siège du bourrelet est destiné à s'appuyer contre un siège de jante faiblement incliné relativement à l'axe A du pneumatique. C'est le cas pour les pneumatiques pour avion, pour véhicules poids lourds ou pour véhicules de tourisme dont l'inclinaison des sièges de jante est de l'ordre de 5 degrés.

Selon une caractéristique préférentielle, la surface extérieure des bourrelets comprenant un siège, une paroi tronconique d'orientation sensiblement radiale adjacente radialement intérieurement à une paroi dont la section est un arc de cercle EF de centre C, le centre C étant disposé axialement extérieurement relativement au bourrelet et en considérant une ligne CD traversant le bourrelet en faisant un angle $\alpha = +45 \pm 5$ degrés relativement à l'axe A du pneumatique, l'ensemble des seconds renforts est disposé à une distance radiale de l'axe A inférieure ou égale à la ligne CD. Cette ligne CD définit sensiblement une zone d'encastement très rigide où les déformations sont très réduites et une zone de flexion radialement au-dessus de CD. Le fait que tous les second renforts se trouvent dans la zone d'encastrement renforce l'endurance du bourrelet.

Les premiers renforts ont, de préférence, un module sécant d'extension supérieur à 1000 cN/Tex et de tels renforts sont, par exemple, constitués de polyamide aromatique.

La couche de mélange de très haut module d'élasticité a une dureté shore A supérieure à 70. Elle peut aussi avoir un module sécant d'extension à 10 % supérieur à 20 MPa et de préférence supérieur à 30 MPa.

De préférence, l'armature de carcasse des pneumatiques selon l'invention comprennent deux ou trois alignements circonférentiels de renforts de haut module d'élasticité, en polyamide aromatique, par exemple.

Deux alignements circonférentiels sont nécessaires pour résister aux très fortes sollicitations mécaniques subies, mais il ne faut pas dépasser trois alignements pour ne pas de façon dommageable la rigidité en flexion des flancs.

De préférence, le bourrelet du pneumatique selon l'invention ayant une surface extérieure destinée à venir en contact avec la surface correspondante du siège et du crochet de la jante, après montage sur ladite jante et gonflage du pneumatique, la zone de contact entre la surface extérieure du bourrelet et la jante s'étend jusqu'au point B du crochet de rayon maximum $R_J$.

Avantageusement, $\Phi$ étant le diamètre de la circonférence de la surface extérieure du bourrelet destinée à venir s'appuyer contre la circonférence du crochet de la jante de rayon maximum $R_J$, on a :

$$\Phi = 2(R_J - \varepsilon)$$

avec $\varepsilon$ compris entre 0,5 et 2 mm.

Cela permet au bourrelet de bien venir " s'asseoir " sur le siège et le crochet de la jante et a pour avantage de limiter la courbure prise par les alignements circonférentiels de l'armature de carcasse lors du roulage, particulièrement dans l'aire de contact.

Selon un mode de réalisation avantageux, les premiers renforts de l'armature de carcasse forment des allers et retours disposés de façon adjacente, avec, au niveau de chaque bourrelet, des boucles reliant chaque fois un aller à un retour.

Les caractéristiques et avantages de l'invention seront mieux compris à l'aide de la description qui suit et qui se réfère au dessin annexé illustrant à titre non limitatif des exemples de réalisation dans le cas de pneumatiques d'avion et sur lequel :

-   la figure 1 présente schématiquement, vu en section axiale, un pneumatique selon l'invention ;
-   la figure 2 est une vue en perspective, montrant schématiquement la disposition d'une partie des renforts de l'armature de carcasse ;
-   la figure 3 présente un bourrelet d'un second mode de réalisation.

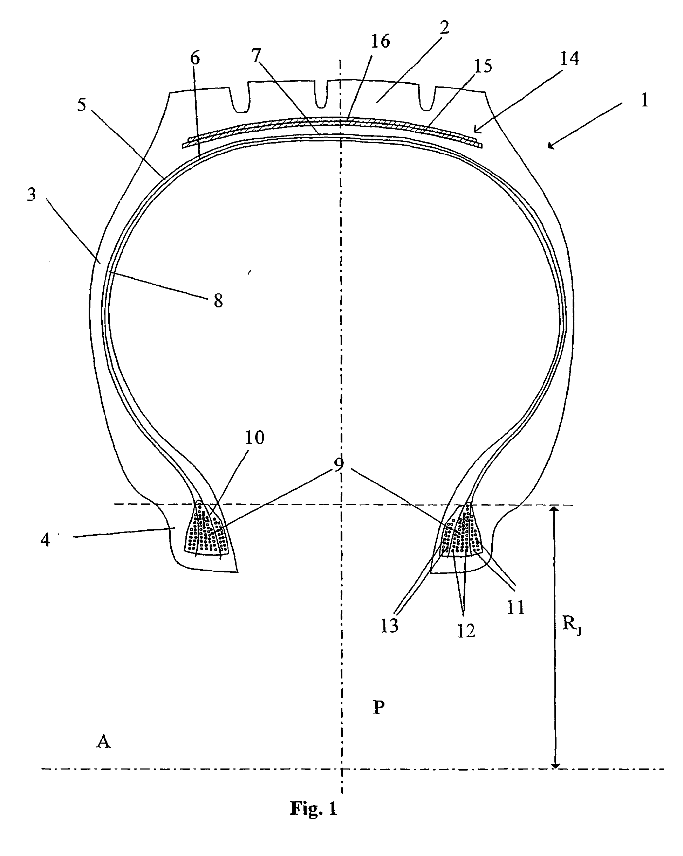

Le pneumatique 1 d'avion représenté schématiquement en demi-coupe axiale à la figure 1 comprend un sommet 2, deux flancs 3 et deux bourrelets 4. Une armature de carcasse 5 s'étend d'un bourrelet à l'autre et est constituée de deux alignements circonférentiels 6 et 7 de premiers renforts. Les alignements circonférentiels de premiers renforts 6 et 7 sont orientées radialement dans les flancs 3 et sont constituées de renforts en polyamide aromatique ou aramide. Les premiers renforts sont disposées parallèlement et sont séparés par une couche de mélange 8 dont la nature et le module sont adaptés en fonction de leur position dans le pneumatique.

L'ancrage des deux alignements circonférentiels 6 et 7 est assuré dans les bourrelets 3 par des alignements ou " piles " 9 de second renforts orientés circonférentiellement et disposés axialement de part et d'autre de chaque alignement circonférentiel de premiers renforts 6 et 7. Chaque alignement ou pile 9 de seconds renforts peut être obtenue par enroulement hélicoïdal d'un renfort. Les premiers renforts, radiaux, et seconds renforts, circonférentiels, sont séparés les uns des autres par une couche de mélange caoutchoutique 10 de très haut module d'élasticité pour éviter tout contact direct d'un renfort avec un autre. Cette couche 10 a un module sécant d'extension à 10 % supérieur à 20 MPa et de préférence à 30 MPa. Sa dureté shore A est aussi supérieure à 70. La tension qui se développe dans les premiers renforts lors du gonflage du pneumatique 1 est reprise notamment par l'adhésion latérale entre chaque alignement circonférentiel 6 et 7 et les piles 9 de renforts circonférentiels. Cette structure de bourrelet assure un excellent ancrage qui reste très efficace même pour les pressions de gonflage très élevées des pneumatiques d'avion, supérieures à 12 bars et pouvant atteindre 25 bars dans certaines applications particulières.

Les piles 9 de seconds renforts sont réparties en trois groupes, deux piles 11 disposées axialement extérieurement à l'armature de carcasse 5 du côté extérieur du pneumatique, deux piles 13 disposées axialement intérieurement relativement à l'armature de carcasse 5, du côté intérieur du pneumatique et 4 piles 12 disposées entre les deux alignements circonférentiels 6 et 7 de l'armature de carcasse 5.

Le second renfort utilisé dans ce pneumatique est un monofilament ou fil unitaire d'acier de diamètre 0,98 mm. Ce renfort est bien entendu adhérisé avec un revêtement laitonné ou zingué. Son usage permet d'obtenir un très faible encombrement pour une très forte rigidité d'extension de l'ensemble des piles 9. Son coût est aussi réduit relativement aux assemblages usuellement utilisés dans les pneumatiques. Il est aussi possible de remplacer ces fils unitaires par des assemblages métalliques bien connus dans le domaine des pneumatiques.

Pour obtenir une bonne homogénéité de sollicitation mécanique des différentes piles 7, il est très utile de vérifier que $0,6 \leq \dfrac{\sum R_I}{\sum R_E} \leq 1,5$, et de préférence

$0,7 \leq \dfrac{\sum R_I}{\sum R_E} \leq 1,3$. Dans le cas du pneumatique décrit, en considérant le nombre de spires disposées intérieurement et extérieurement relativement à l'armature de carcasse, on obtient :

$$\sum R_I / \sum R_E \cong 1,24.$$

On peut aussi noter que le nombre de spires des piles diminue progressivement avec la distance relativement à l'axe A du pneumatique 1. Il en résulte une forme sensiblement conique de la disposition des seconds renforts. Cela a pour avantage de stabiliser fortement les bourrelets 4 lors du gonflage du pneumatique et lors du passage dans l'aire de contact en service.

L'ensemble des spires des piles 9 est noyé dans le mélange caoutchoutique 10 de très haut module d'élasticité pour assurer une bonne reprise des efforts dus à la pression de gonflage et ainsi un excellent ancrage de l'armature de carcasse dans les bourrelets 4.

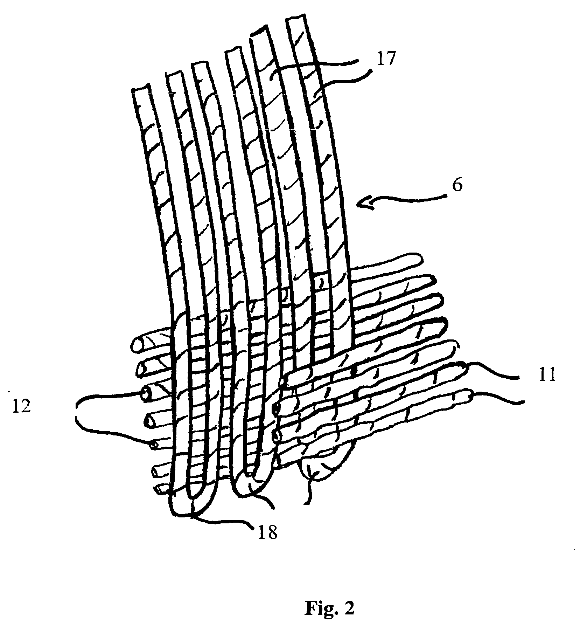

La figure 2 est une vue en perspective de l'un des alignements circonférentiels de premiers renforts, l'alignement 6, dans laquelle seuls les renforts sont représentés. Dans cette figure, on voit l'alignement circonférentiel 6 de premiers renforts qui est constitué de portions de renforts 17. A leurs extrémités radialement inférieures, les portions de renforts 17 forment des boucles 18 juxtaposées, situées dans le bourrelet 4. Ces boucles 18 sont adjacentes et ne se chevauchent pas. De part et d'autre axialement de l'alignement circonférentiel 6 de premiers renforts, sont représentées seulement les piles 11 et 12 directement adjacentes à cet alignement 6. Pour la clarté du dessin, seul l'alignement circonférentiel 6 de premiers renforts et deux piles ont été représentés, mais, l'alignement circonférentiel 7 de premiers renforts présente la même disposition des portions de renforts 17.

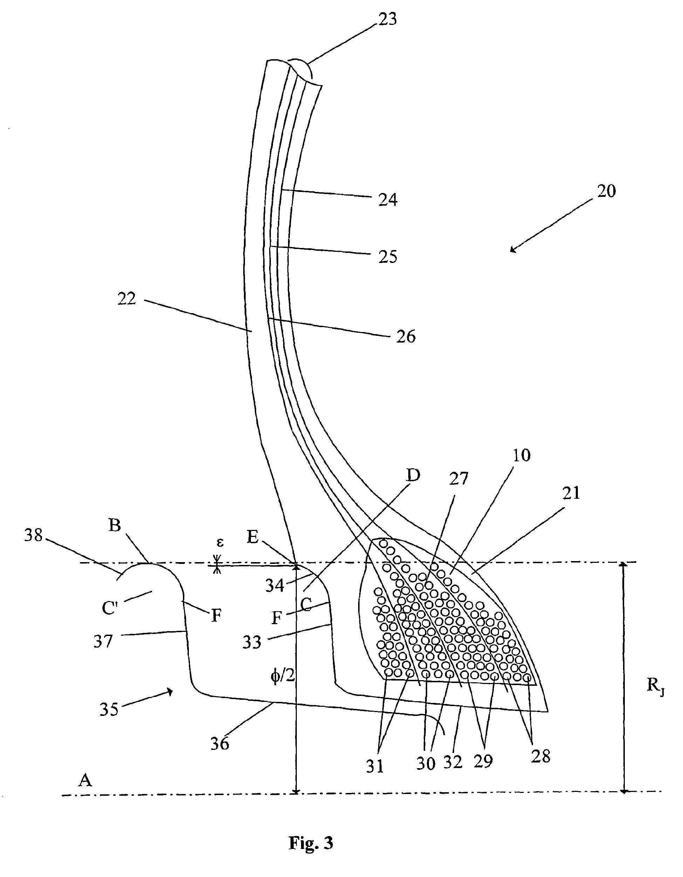

La figure 3 présente un bourrelet 21 et un flanc 22 d'un second mode de réalisation d'un pneumatique 20 selon l'invention dans lequel l'armature de carcasse 23 est constituée de trois alignements circonférentiels, 24, 25, 26, de renforts en polyamide aromatique ou aramide. Dans le bourrelet 21 sont disposées des piles 27 de seconds renforts d'orientation circonférentielle. Ces piles 27 sont ici séparées en quatre groupes. On trouve successivement axialement du côté intérieur du bourrelet vers le côté extérieur, trois piles 28 disposées intérieurement relativement à l'alignement circonférentiel de premiers renforts 24, quatre piles 29 disposées entre les alignements circonférentiels de premiers renforts 24 et 25, trois piles 30 disposées entre les alignements circonférentiels 25 et 26 et trois piles 31 disposées axialement extérieurement relativement à l'alignement 26.

Comme précédemment, les seconds renforts sont constitués de monofilaments ou fils unitaires d'acier et le nombre de spires est tel que l'on vérifie que la somme des rigidités d'extension des piles disposées extérieurement relativement à l'armature de carcasse est sensiblement du même ordre que la somme des rigidités d'extension des piles disposées intérieurement relativement à l'armature de carcasse 23.

La surface extérieure du bourrelet 21 comprend un siège 32, une paroi tronconique d'orientation sensiblement radiale 33 adjacente radialement intérieurement à une paroi 34 dont la section est un arc de cercle EF de centre C. C est disposé à l'extérieur du bourrelet 21. En considérant la ligne CD qui traverse le bourrelet en faisant un angle α=+45±5 degrés relativement à l'axe A du pneumatique (cet angle est déterminé lorsque le pneumatique est monté sur sa jante), on constate que l'ensemble des seconds renforts 27 est disposé à une distance radiale de l'axe A inférieure ou égale à cette ligne CD. Cette ligne CD définit sensiblement une zone d'encastrement très rigide où les déformations sont très réduites et une zone de flexion radialement au-dessus de CD. Le fait que tous les seconds renforts se trouvent dans la zone d'encastrement renforce l'endurance du bourrelet.

Cette surface extérieure du bourrelet est destinée à venir s'appuyer contre la paroi d'une jante 35 dont le profil extérieur est aussi représenté à la figure 3. Ce profil comprend le siège 36 et la paroi sensiblement radiale du crochet 37 suivie du rebord 38. Le rebord 38 a une section droite en arc de cercle de centre C'. Le point de rayon le plus élevé est B, de rayon $R_J$. Le point E disposé sur la surface axialement extérieure du bourrelet 21 est destiné à venir en contact avec sensiblement le point B. Lorsque le pneumatique est monté sur la jante 35, les surfaces 34 et 38 sont homocentriques, c'est-à-dire que leurs centres C et C' sont confondus. Le point E est disposé sur une circonférence de diamètre Φ. On a la relation :

$$\Phi = 2(R_J - \varepsilon)$$

avec ε compris entre 0,5 et 2 mm.

Ce léger décalage du point E entre sa position libre et sa position montée sur la jante, en contact avec B, permet au bourrelet d'être légèrement mis en extension lors de son montage sur la jante et favorise la qualité du contact obtenu. Ce contact jusqu'au point E renforce la stabilité du bourrelet lors de la mise en pression du pneumatique et lors du passage dans l'aire de contact en service. En conséquence, on constate que les alignements circonférentiels de l'armature de carcasse sont nettement moins sollicités en compression lors du passage dans l'aire de contact contrairement à ce qui se passe pour des pneumatiques d'avion d'architecture classique.

A la figure 1 est aussi présenté un exemple d'armature de sommet 14. Celle-ci est constituée d'un bloc de travail comportant deux nappes de renforts 15 et 16 d'orientation sensiblement circonférentielle obtenues par enroulement hélicoïdal d'au moins un renfort. Ce renfort est constitué de renforts en polyamide aromatique ou aramide. Le nombre de nappes de renfort ainsi que le pas de pose sont adaptés en fonction de la dimension du pneumatique et de ses conditions d'utilisation. Ce mode de réalisation d'une armature de sommet a l'avantage de procurer un frettage très efficace qui minimise la variation des dimensions du pneumatique lors du gonflage ainsi qu'à haute vitesse. On constate que l'évolution du profil peut être trois à quatre fois plus faible que pour un pneumatique d'avion usuel tel un 30-7.7R16 AIRX. Cet excellent frettage a aussi l'avantage de ne pas mettre en forte extension les mélanges constituant la bande de roulement du sommet du pneumatique. Les fissurations en surface de la bande de roulement dues à l'ozone présente dans l'air sont fortement réduites.

On a testé un pneumatique selon l'invention de dimension 30-7,7 R16 comportant :

- comme armature de carcasse trois alignements circonférentiels de premiers renforts constitués de retors adhérisé de titre égal à 501 tex élaborés à partir de 3 brins aramide identiques de 167 tex. La densité des premiers renforts est de 88 f/dm dans la zone des bourrelets ;

- comme seconds renforts des monofilaments d'acier de diamètre 0,98 mm et répartis en 13 piles 9 :

  • 3 piles axialement les plus intérieures avec 14, 17 et 20 spires,
  • 4 piles entre les alignements circonférentiels 24 et 25 avec 10, 14, 16 et 20 spires,
  • 3 piles entre les alignements circonférentiels 25 et 26 avec 19, 15 et 10 spires, et
  • 3 piles axialement les plus extérieures avec 14, 10 et 7 spires.

- une armature de sommet avec trois nappes de renforts orientés sensiblement circonférentiellement constitués de retors adhérisés de titre égal à 660 tex élaborés à partir de 2 brins aramides identiques de 330 tex ; les renforts ont un pas de pose de 1,2 mm.

La couche de mélange de très haut module d'élasticité avait un module sécant d'extension de 45 MPa et une dureté shore A de 90.

Ce pneumatique a subi des tests de résistance à l'éclatement et les pressions maximales mesurées ont été de l'ordre de 100 bars. Il est aussi caractérisé par un taux d'allongement de son développement entre la pression nulle et sa pression de service de 15 bars de l'ordre de 1,5 %. Ce pneumatique a aussi subi avec succès des tests de décollage similaires aux tests normalisés pour l'homologation des pneumatiques pour avion.

La confection du pneumatique selon l'invention peut avantageusement être réalisée sur un noyau rigide imposant la forme de sa cavité intérieure, tels ceux décrits par EP 242 840 ou EP 822 047, incorporés par référence dans la présente demande. On applique sur ce noyau, dans l'ordre requis par l'architecture finale, tous les constituants du pneumatique, qui sont disposés directement à leur place finale, sans subir de conformation à aucun moment de la confection. La cuisson s'effectue sur noyau, celui-ci n'étant retiré qu'après la phase de vulcanisation.

Ce mode de fabrication a l'avantage de réduire fortement voire d'éliminer les précontraintes imposées aux renforts, particulièrement à ceux orientés à 0°, lors des phases traditionnelles de conformation

On peut aussi refroidir partiellement le bandage sur le noyau pour maintenir les renforts dans l'état de déformation imposé lors de la pose.

On peut aussi, de manière équivalente, fabriquer le pneumatique sur un tambour tel que décrit dans WO 97/47 463 ou EP 0 718 090, à condition de faire la conformation de l'ébauche du pneumatique avant d'effectuer la pose des renforts orientés circonférentiellement.

On peut encore réaliser la pose des renforts orientés circonférentiellement sur une forme à la géométrie identique à la forme visée dans le moule de cuisson. Le bloc sommet est ensuite assemblé avec l'ébauche complémentaire du pneumatique suivant des techniques de transfert connues de l'homme de l'art, puis, toujours suivant des principes connus, le pneumatique est emboîté et mis sous pression par déploiement d'une membrane à l'intérieur du pneumatique.

Ce mode de réalisation garantit aussi l'absence de précontraintes dues à la conformation en presse de vulcanisation.

## Revendications

1. Pneumatique comprenant un sommet, deux flancs et deux bourrelets, une armature de carcasse ancrée dans chacun des bourrelets et une armature de sommet, dans lequel l'armature de carcasse comprend au moins deux alignements circonférentiels de premiers renforts de haut module d'élasticité, chaque alignement circonférentiel desdits premiers renforts étant, dans chaque bourrelet, bordé axialement intérieurement et axialement extérieurement par des seconds renforts orientés sensiblement circonférentiellement de module supérieur ou égal à celui desdits premiers renforts, lesdits premiers renforts et seconds renforts étant séparés par une couche de mélange de très haut module d'élasticité, **caractérisé en ce que**, en considérant $\Sigma R_I$ somme des rigidités d'extension des seconds renforts disposés axialement intérieurement relativement à l'armature de carcasse et en considérant $\Sigma R_E$ somme des rigidités d'extension des seconds renforts disposés axialement de part et d'autre de l'armature de carcasse, on a :

$$0,6 \leq \frac{\sum R_I}{\sum R_E} \leq 1,5$$

2. Pneumatique selon la revendication 1, dans lequel :

$$0,7 \leq \frac{\sum R_I}{\sum R_E} \leq 1,3$$

3. Pneumatique selon l'une des revendications 1 et 2, dans lequel, lesdits bourrelets sont destinés à s'appuyer contre des sièges de jante faiblement inclinés relativement à l'axe du pneumatique.

4. Pneumatique selon l'une des revendications 1 à 3, dans lequel la surface extérieure des bourrelets comprenant un siège, une paroi tronconique d'orientation sensiblement radiale adjacente radialement intérieurement à une paroi dont la section est un arc de cercle EF de centre C, ledit centre C étant disposé axialement extérieurement relativement au bourrelet et en considérant une ligne CD traversant le bourrelet en faisant un angle $\alpha = +45 \pm 5$ degrés relativement à l'axe A du pneumatique, l'ensemble des seconds renforts est disposé à une distance radiale de l'axe A inférieure ou égale à ladite ligne CD.

5. Pneumatique selon l'une des revendications 1 à 3, dans lequel, ledit bourrelet ayant une surface extérieure destinée à venir en contact avec la surface correspondante du siège et du crochet de ladite jante, après montage sur ladite jante et gonflage dudit pneumatique, la zone de contact entre ladite surface extérieure dudit bourrelet et ladite jante s'étend jusqu'au point du crochet de rayon maximum $R_J$.

6. Pneumatique selon la revendication 5, dans lequel, $\Phi$ étant le diamètre de la circonférence de la surface extérieure du bourrelet destinée à venir s'appuyer contre la circonférence du crochet de la jante de rayon maximum $R_J$, on a :

$$\Phi = 2(R_J - \varepsilon)$$

avec s compris entre 0,5 et 2 mm.

7. Pneumatique selon l'une des revendications 1 à 6, dans lequel l'armature de carcasse est constituée d'au plus trois alignements circonférentiels de premiers renforts de haut module d'élasticité.

8. Pneumatique selon l'une des revendications 1 à 7, dans lequel lesdits premiers renforts de l'armature de carcasse forment des allers et retours disposés de façon adjacente, avec, au niveau de chaque bourrelet, des boucles reliant chaque fois un aller à un retour.

9. Pneumatique selon l'une des revendications 1 à 8, dans lequel les renforts de haut module d'élasticité ont un module sécant d'extension supérieur à 1000 cN/Tex.

10. Pneumatique selon la revendication 9, dans lequel les renforts de haut module d'élasticité sont constitués de polyamide aromatique.

11. Pneumatique selon l'une des revendications 1 à 10, dans lequel la couche de mélange de très haut module d'élasticité a un module sécant d'extension à 10 % supérieur à 20 MPa et de préférence supérieur à 30 MPa.

12. Pneumatique selon l'une des revendications 1 à 10, dans lequel la couche de mélange de très haut module d'élasticité a une dureté shore A supérieure à 70.

**Claims**

1. A tyre, comprising a crown, two sidewalls and two beads, a carcass reinforcement anchored in each of the beads and a crown reinforcement, in which the carcass reinforcement comprises at least two circumferential alignments of first reinforcing threads of high elasticity modulus, each circumferential alignment of said first reinforcing threads being, within each bead, bordered axially internally and axially externally by second reinforcing threads oriented substantially circumferentially of a modulus greater than or equal to that of said first reinforcing threads, said first reinforcing threads and second reinforcing threads being separated by a layer of mix of very high elasticity modulus, **characterised in that**, considering $\Sigma R_I$ as being the total of the rigidities of extension of the second reinforcing threads arranged axially internally relative to the carcass reinforcement and considering $\Sigma R_E$ as being the total of the rigidities of extension of the second reinforcing threads arranged axially on either side of the carcass reinforcement, then:

$$0.6 \le \frac{\sum R_I}{\sum R_E} \le 1.5$$

2. A tyre according to Claim 1, in which:

$$0.7 \le \frac{\sum R_I}{\sum R_E} \le 1.3$$

3. A tyre according to one of Claims 1 and 2, in which said beads are intended to bear against rim seats which are slightly inclined relative to the axis of the tyre.

4. A tyre according to one of Claims 1 to 3, in which, the outer surface of the beads comprising a seat, a frustoconical wall of substantially radial orientation adjacent radially internally to a wall the section of which is an arc of a circle EF of centre C, said centre C being arranged axially externally relative to the bead, and considering a line CD passing through the bead, forming an angle $\alpha$ = +45 $\pm$ 5 degrees relative to the axis A of the tyre, all the second reinforcing threads are arranged at a radial distance from the axis A less than or equal to said line CD.

5. A tyre according to one of Claims 1 to 3, in which, said bead having an outer surface intended to come into contact with the corresponding surface of the seat and of the hook of said rim, after mounting on said rim and inflation of said tyre, the contact zone between said outer surface of said bead and said rim extends as far as the point of the hook of maximum radius $R_J$.

6. A tyre according to Claim 5, in which, $\Phi$ being the diameter of the circumference of the outer surface of the bead intended to come to bear against the circumference of the hook of the rim of maximum radius $R_J$, then:

$$\Phi = 2(R_J - \varepsilon)$$

with $\varepsilon$ being between 0.5 and 2 mm.

7. A tyre according to one of Claims 1 to 6, in which the carcass reinforcement is formed of at most three circumferential alignments of first reinforcing threads of high elasticity modulus.

8. A tyre according to one of Claims 1 to 7, in which said first reinforcing threads of the carcass reinforcement form forward and return paths arranged adjacently, with, at the level of each bead, loops connecting one forward to one return path each time.

9. A tyre according to one of Claims 1 to 8, in which the reinforcing threads of high elasticity modulus have a secant modulus of extension greater than 1000 cN/tex.

10. A tyre according to Claim 9, in which the reinforcing threads of high elasticity modulus are formed of aromatic polyamide.

11. A tyre according to one of Claims 1 to 10, in which the layer of mix of very high elasticity modulus has a secant modulus of extension at 10% greater than 20 MPa and preferably greater than 30 MPa.

12. A tyre according to one of Claims 1 to 10, in which the layer of mix of very high elasticity modulus has a Shore A hardness of greater than 70.

## Patentansprüche

1. Luftreifen, der einen Scheitel, zwei Flanken und zwei Wülste, eine Karkassenbewehrung, die in jedem Wulst verankert ist, und eine Scheitelbewehrung aufweist, wobei die Karkassenbewehrung mindestens zwei umlaufende Anordnungen von ersten Verstärkungen mit hohem Elastizitätsmodul umfasst, jede umlaufende Anordnung von ersten Verstärkungen in jedem Wulst axial innen und axial außen von zweiten Verstärkungen eingefasst ist, die in etwa in Umfangsrichtung orientiert sind und einen Modul besitzen, der dem Modul der ersten Verstärkungen entspricht oder größer ist als dieser Modul, wobei die ersten und zweiten Verstärkungen über eine Lage aus einer Mischung mit sehr hohem Elastizitätsmodul voneinander getrennt sind, **dadurch gekennzeichnet, dass**, wenn $\Sigma R_I$ die Summe der Dehnungssteifigkeiten der relativ zur Karkassenbewehrung axial innerhalb angeordneten zweiten Verstärkungen und $\Sigma R_E$ die Summe der Dehnungssteifigkeiten der axial auf beiden Seiten der Karkassenbewehrung angeordneten zweiten Verstärkungen ist, gilt:

$$0{,}6 \le \frac{\sum R_I}{\sum R_E} \le 1{,}5 \,.$$

2. Luftreifen nach Anspruch 1, wobei:

$$0{,}7 \le \frac{\sum R_I}{\sum R_E} \le 1{,}3 \,.$$

3. Luftreifen einem der Ansprüche 1 und 2, wobei die Wülste an Felgensitzen in Auflage kommen sollen, die in Bezug auf die Achse des Luftreifens etwas geneigt sind.

4. Luftreifen nach einem der Ansprüche 1 bis 3, bei dem die äußere Oberfläche der Wülste einen Sitz und eine kegelstumpfförmige Wand mit in etwa radialer Orientierung radial innen angrenzend an eine Wand aufweist, deren Querschnitt ein Kreisbogen EF um das Zentrum C ist, wobei das Zentrum C relativ zum Wulst axial außen angeordnet ist und wobei alle zweiten Verstärkungen bezüglich einer Linie CD, die durch den Wulst hindurchgeht und in Bezug auf die Achse A des Luftreifens einen Winkel $\alpha$ von +45 $\pm$ 5 Grad bildet in einem radialen Abstand von der Achse A kleiner oder gleich der Linie CD angeordnet sind.

5. Luftreifen nach einem der Ansprüche 1 bis 3, bei dem der Wulst des Luftreifens äußere Oberflächen aufweist, die nach dem Aufziehen auf die Felge und Aufpumpen des Luftreifens mit der entsprechenden Oberfläche des Sitzes und des Horns in Kontakt kommen sollen, wobei sich die Kontaktzone der äußeren Oberfläche des Wulstes und der Felge bis zu dem Punkt des Felgenhorns mit dem maximalen Durchmesser $R_J$ erstreckt.

6. Luftreifen nach Anspruch 5, bei dem $\Phi$ der Durchmesser des Umfangs der äußeren Oberfläche des Wulstes ist, der am Umfang des Felgenhorns mit einem maximalen Radius $R_J$ in Auflage kommen soll, mit:

$$\Phi = 2(R_J - \varepsilon)$$

wobei $\varepsilon$ im Bereich von 0,5 bis 2 mm liegt.

7. Luftreifen nach einem der Ansprüche 1 bis 6, bei dem die Karkassenbewehrung aus höchstens drei umlaufenden Anordnungen von ersten Verstärkungen mit hohem Elastizitätsmodul besteht.

8. Luftreifen nach einem der Ansprüche 1 bis 7, bei dem die ersten Verstärkungen der Karkassenbewehrung hingeführte Abschnitte und zurückgeführte Abschnitte bilden, die auf Höhe der Wülste mit Schleifen nebeneinander angeordnet sind, die jeweils einen hingeführten und rückgeführten Abschnitt verbinden.

9. Luftreifen nach einem der Ansprüche 1 bis 8, bei dem die Verstärkungen mit hohem Elastizitätsmodul einen Dehnungssekantenmodul über 1000 cN/Tex aufweisen.

10. Luftreifen nach Anspruch 9, bei dem die Verstärkungen mit hohem Elastizitätsmodul aus einem aromatischen Polyamid bestehen.

11. Luftreifen nach einem der Ansprüche 1 bis 10, bei dem die Lage der Mischung mit sehr hohem Elastizitätsmodul einen Sekantenmodul bei 10 % Dehnung über 20 MPa und vorzugsweise über 30 MPa aufweist.

12. Luftreifen nach einem der Ansprüche 1 bis 10, bei dem die Lage der Mischung mit sehr hohem Elastizitätsmodul eine Shore A-Härte über 70 besitzt.

**Fig. 1**

**Fig. 2**

**Fig. 3**